Europäisches Patentamt

European Patent Office

Office européen des brevets

(11) Veröffentlichungsnummer: **0 471 254 A1**

## EUROPÄISCHE PATENTANMELDUNG

(21) Anmeldenummer: **91113023.5**

(22) Anmeldetag: **02.08.91**

(51) Int. Cl.5: **C08L 81/02**, C08K 5/32

(30) Priorität: **15.08.90 DE 4025782**

(43) Veröffentlichungstag der Anmeldung:
**19.02.92 Patentblatt 92/08**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Köhler, Burkhard, Dr.**
**Mündelheimstrasse 94**
**W-4150 Krefeld 11(DE)**
Erfinder: **Heinz, Hans-Detlef, Dr.**
**Breslauer Strasse 31**
**W-4150 Krefeld 11(DE)**
Erfinder: **Reinking, Klaus, Dr.**
**Robert-Stolz-Strasse 16 b**
**W-5632 Wermelskirchen(DE)**

(54) **Mischungen aus Polyarylensulfiden, Phenolharz-Nitroarylaten, Glasfasern und gegebenenfalls weiteren Füllstoffen.**

(57) Die Erfindung betrifft Mischungen aus Polyarylensulfiden, Phenolharz-Nitroarylaten, Glasfasern und gegebenenfalls weiteren Füll(zusatz)stoffen. Die Mischungen zeichnen sich durch gute mechanische Eigenschaften aus.

EP 0 471 254 A1

Die Erfindung betrifft Mischungen aus Polyarylensulfiden, Phenolharz-Nitroarylaten, Glasfasern und gegebenenfalls weiteren Füll(zusatz)stoffen. Die Mischungen zeichnen sich durch gute mechanische Eigenschaften aus.

Polyarylensulfide (PAS) sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bisher Duroplasten vorbehalten waren.

PAS hat unbefriedigende mechanische Eigenschaften für einige Anwendungen im Spritzgußbereich. Insbesondere sind Randfaserdehnung und Schlagzähigkeit für die Praxis nicht ausreichend. Es hat sich daher als Vorteil erwiesen, PAS z.B. durch Abmischung mit anderen Thermoplasten in den genannten Eigenschaften zu verbessern.

Ferner gelang die Verbesserung der mechan. Eigenschaften von PAS und Mischungen aus Maleinsäureanhydrid-gepfropften, hydrierten Dienkautschuken und Epoxiden (JP-A 63-118369). Die großen Mengen an verwendeten Maleinsäureanhydrid-gepfropften Polyolefinen mit niedriger Glastemperatur verbessern die Zähigkeit, jedoch läßt sich die Biegefestigkeit nicht wesentlich steigern.

Für bestimmte Anwendungsgebiete ist das Eigenschaftsprofil derartiger Abmischungen jedoch nicht immer ganz befriedigend.

Es wurde nun gefunden, daß Abmischungen von Polyphenylensulfid (PPS) mit Phenolharz-Nitroarylaten, Glasfasern und gegebenenfalls weiteren Zusätzen sich durch ihre mechanischen Eigenschaften auszeichnen.

Gegenstand der Erfindung sind daher Mischungen aus

A) 89,9 bis 20 Gew.-% Polyarylensulfiden, vorzugsweise Polyphenylensulfid,

B) 0,1 bis 35 Gew.-%, vorzugsweise 0,2 bis 5 Gew.-% Phenoplasten, vorzugsweise Novolaken, deren OH-Gruppen ganz oder teilweise mit 2-, 3-oder 4-Nitrobenzoesäure oder 3,5-Dinitrobenzoesäure oder anderen Säuren der Formel (I)

$$(O_2N)_n\text{-Ar-COOH} \qquad (I),$$

wobei

n für 1, 2 oder 3 steht und

Ar für einen $(n+1)$-valenten, aromatischen Rest mit 6-14 C-Atomen steht, verestert sind,

C) 10 bis 79,9 Gew.-%, vorzugsweise

30 bis 60 Gew.-% Glasfasern,

die vorzugsweise mit Polyurethanfilmbildnern und Aminosilan- oder Epoxysilanhaftvermittlern, besonders bevorzugt Aminosilanhaftvermittlern geschlichtet sind und gegebenenfalls bis zu 300 Gew.-%, bezogen auf PAS anderen mineralischen oder organischen Füll- und Verstärkungsstoffen und/oder anorganischen oder organischen Hilfsstoffen.

Beispiele für Phenoplaste sind sämtliche OH-Gruppenhaltige Verbindungen, die in Phenoplaste, Bachmann/Müller, VEB-Deutscher Verlag für Grundstoffindustrie, Leipzig 1973, beschrieben sind, vorzugsweise Phenol-Formaldehyd-Kondensate mit Phenol-Überschuß, (Novolake).

Die Umsetzung der Phenoplaste mit den nitroaromatischen Carbonsäuren kann nach Schotten-Baumann analog Organikum, VEB-Deutscher Verlag der Wissenschaft, Berlin 1973, 12. Aufl., Seite 446, durchgeführt werden, wobei für jedes Äquivalent OH-Gruppen 0,5 - 1 Mol des nitroaromatischen Säurechlorids zugegeben werden.

Novolake sind kommerziell erhältlich, z.B. Vulkadur RB® der Fa. Bayer.

Erfindungsgemäß werden handelsübliche, bevorzugt mit Polyurethanfilmbildnern und Aminosilan- oder Epoxysilanhaftvermittlern geschlichtete Glasfasern eingesetzt. Sie haben einen Durchmesser von 1 bis 20 μm, vorzugsweise von 5 bis 13 um. Es können Endlosglasfasern eingesetzt werden und/oder Herstellungsverfahren gewählt werden, bei denen die Länge der Fasern in der fertigen Abmischung 0,05 bis 10 mm, vorzugsweise 0,1 bis 2 mm, beträgt. Es können auch Endlosfasern (Rovings) eingesetzt werden in Verfahren zur Herstellung von endlosverstärktem Unidirektionalverbund.

Gegebenenfalls Können auch - insbesondere teilweise - anstelle der Glasfasern handelsübliche Glaskugeln eingesetzt werden, z.B. Ballotini-Glaskugeln.

Als weitere, mineralische Füllstoffe oder Zusatzstoffe seien Glimmer, Talkum, Quarzmehl, Metalloxide und Sulfide, z.B. $TiO_2$, ZnO, ZnS, Graphit, Ruß, Fasern, z.B. aus Quarz oder Kohlenstoff, Carbonate wie z.B. $MgCO_3$, $CaCO_3$, oder Sulfat wie z.B. $CaSO_4$, $BaSO_4$, genannt.

Als weitere übliche Zusatzstoffe können Pigmente, Entformungsmittel, E-Wachse, Fließhilfsmittel, Nuclieierungsmittel oder Stabilisatoren eingesetzt werden.

Es können 0 bis 300 Gew.-%, bezogen auf PAS, Füll- und Zusatzstoffe eingesetzt werden.

Die erfindungsgemäßen Mischungen können auf übliche Art und Weise durch Extrusion hergestellt werden.

Die erfindungsgemäßen Mischungen können auf übliche Weise zu Formteilen, Halbzeug, Leiterplatten, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

Beispiele

Die Herstellung der erfindungsgemäßen Mischungen erfolgte auf einem Doppelwellenextruder ZSK 32 von Werner und Pfleiderer bei 320° C.

Das verwendete PPS wies eine Schmelzviskosität von 45 Pas (360° C), Schubspannung = 1000 $s^{-1}$ auf und wurde nach EP-A 171 021 hergestellt.

Als glasfasern wurde die mit Polyurethanfilmbildner und Aminosilanhaftvermittler geschlichtete Schnittglasfaser Bayer 65 7916® zu 40 Gew.-% eingesetzt.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biegemodul und Schlagzähigkeit $a_n$ (reversed notched ISO 180) untersucht.

Vergleichsbeispiel

Gemischt wurden 60 Gew.-% PPS mit 40 Gew.-% Glasfaser.

Synthesebeispiel (mit 3-Nitrobenzoesäure veresterter Novolak)

Man versetzt 100 g Vulkadur RB® mit 1 l Wasser und 60 g NaOH und gibt unter Rühren die Lösung von 200 g 3-Nitrobenzoylchlorid in 300 ml THF hinzu (Eiskühlung). Nach 1/4 h werden 500 ml $CH_2Cl_2$ hinzugefügt, die org. Phase abgetrennt und eingedampft. Der H-Gehalt des Produktes entspricht der Theorie.

Beispiel 2

Gemischt wurden 59 Gew.-% PPS mit 40 Gew.-% Glasfaser, 1 Gew.-% 4-Nitrobenzoesäureester des Novolaks.

Folgende Tabelle faßt die mechanischen Eigenschaften zusammen.

| Beispiel | Biegefestig-keit (MPa) | Randfaser-dehnung (%) | Biegemodul (MPa) | Izod-Schlag-zähig-keit (kJ/m²) |
|---|---|---|---|---|
| Vergleich | 250 | 1,9 | 13.000 | 30 |
| 1 | 299 | 2,4 | 12.800 | 44 |

**Patentansprüche**

1. Mischungen aus
   A) 89,9 bis 20 Gew.-% Polyarylensulfiden,
   B) 0,1 bis 35 Gew.-% Phenoplasten deren OH-Gruppen ganz oder teilweise mit 2-, 3- oder 4-Nitrobenzoesäure oder 3,5-Dinitrobenzoesäure oder anderen Säuren der Formel (I)

   $(O_2N)_n$-Ar-COOH      (I),

   wobei
      n     für 1, 2 oder 3 steht und

Ar     für einen (n + 1)-valenten aromatischen Rest mit 6-14 C-Atomen steht, verestert sind,
C) 10 bis 79,9 Gew.-% Glasfasern,
die gegebenenfalls mit Polyurethanfilmbildnern und Aminosilan-oder Epoxysilanhaftvermittlern geschlichtet sind und gegebenenfalls bis zu 300 Gew.-%, bezogen auf PAS anderen mineralischen
oder organischen Füll- und Verstärkungsstoffen und/oder anorganischen oder organischen Hilfsstoffen.

**2.**    Verwendung der Mischungen nach Anspruch 1, zur Herstellung geformter Körper.

Europäisches
Patentamt

**EUROPÄISCHER RECHERCHENBERICHT**

Nummer der Anmeldung

| EINSCHLÄGIGE DOKUMENTE | | | EP 91113023.5 |
|---|---|---|---|
| **Kategorie** | **Kennzeichnung des Dokuments mit Angabe, soweit erforderlich. der maßgeblichen Teile** | **Betrifft Anspruch** | **KLASSIFIKATION DER ANMELDUNG (Int Cl⁵)** |
| A | DE - A - 3 819 479 (BAYER AG) * Gesamt * ---- | 1,2 | C 08 L 81/02 C 08 K 5/32 |
| | | | **RECHERCHIERTE SACHGEBIETE (Int Cl⁵)** |
| | | | C 08 L 81/00 C 08 K C 08 G 8/00 |

Der vorliegende Recherchenbericht wurde für alle Patentansprüche erstellt.

| Recherchenort | Abschlußdatum der Recherche | Prüfer |
|---|---|---|
| WIEN | 29-11-1991 | TENGLER |